# EUROPEAN PATENT APPLICATION

(11) **EP 4 357 312 A1**
(43) Date of publication of application: **24.04.2024**
(21) Application number: 22306581.4
(22) Date of filing: 19.10.2022
(51) Int. Cl.: C04B 14/02, C04B 28/04, C04B 28/06, C04B 28/08, C04B 7/153

(54) **CEMENTITIOUS COMPOSITION COMPRISING SLAG AND BIOCHAR**

(71) Applicant: Saint-Gobain Weber France, 94370 Sucy en Brie (FR)
(72) Inventor: STARK, Sophia, 79291 Merdingen (DE); QUENTIN, Florian, 45711 DATTELN (DE)
(74) Representative: Saint-Gobain Recherche

(57) **Abstract**

The present invention pertains to a cementitious composition comprising: slag, at least one hydraulic binder and/or at least one activator, biochar particles and at least one aggregate, wherein the weight ratio of biochar to blast furnace slag ranges from 0.025:1 to 0.15:1. It is further directed to a mortar prepared by combining the cementitious composition with water, to its uses and to a method of preparation of this mortar.

## Description

The present invention pertains to a cementitious composition comprising: slag, at least one hydraulic binder and/or at least one activator, biochar particles and at least one aggregate, wherein the weight ratio of biochar to slag ranges from 0.025:1 to 0.15:1. It is further directed to a mortar prepared by combining the cementitious composition with water, to a method of preparation of this mortar and to its uses.

### BACKGROUND OF THE INVENTION

The invention relates to mortars and concrete. Mortars are mixtures comprising a hydraulic binder and granulates (also called aggregates), as well as optionally various additives. After mixing with water, a wet paste or mortar is obtained which can be shaped, for example coated on a support, before hardening. The final product obtained, or hardened mortar, is therefore constituted by granulates bound by a mineral binder obtained by hydration of the hydraulic binder. Mortars are conventionally used in the field of building and public works to form facade coatings or floor coverings, as tiling adhesive, as grouting mortar, as mortar for repairing concrete works, etc.

One of the present concerns remains to significantly reduce the carbon footprint of the construction sector, especially in view of the RE2020 Standard which entered into force in 2022. Classical mortars comprise Portland or aluminous cements as a hydraulic binder, both of which are based on ground clinker mixed with additives such as gypsum. The manufacture of the clinker requires decarbonation of limestone and clay or bauxite, calcination and clinkerization, in a kiln heated to 1,450°C. Portland and aluminous cements are for example the origin of emissions of about 800 kg of CO₂ per ton of cement produced, mainly due to the decarbonation of limestone and to the burning of the fossil material used to heat the kiln. The Applicant has proposed an alternative solution to these cements in WO 2019/086780, in which the hydraulic binder is based on slag, which is a byproduct of the industry. The method of preparation of slag generates less CO₂ than clinkers and therefore makes it possible to improve the carbon balance of the mortars thus produced.

In WO 2019/086780, slag was derived from the recycling by complete melting of the catalysts used for the desulfurization of petroleum products, in particular catalysts based on molybdenum and/or cobalt. Blast furnace slags have also been proposed for use in order to reduce the amount of clinker in cements. Thus, cements CEM II/A-S, CEMII/B-S, CEM III and CEM V contain various amounts of blast furnace slag in addition to the clinker. Work carried out recently has shown that it was possible to replace more than 95% of Portland cement by ground granulated blast furnace slag. Mention can be made for instance of FR 2 952 050 and US 6,409,820 which describe binders based on ground granulated blast furnace slag, which can be used in "mild" conditions that is to say without requiring the use of a highly basic activator system and consequently hazardous to manipulate.

A shortcoming of blast furnace slag is that it contains sulfur, mainly in the form of sulfides. When blast furnace slag is in contact with an acidic environment, hydrogen sulfide may thus be released. It is well known that this sulfur compound has an unpleasant odor, similar to rotten egg, and even becomes a poison when it is present at high concentrations. The olfactory detection threshold is very low and the presence of such a gas can be detected from 0.0005 ppm, whereas the lethal threshold is about 800 ppm. This latter level of concentration is never achieved in the materials of construction. However, the odor can be uncomfortable because very intense and perceptible to a very low concentration.

In order to eliminate or limit the problems related to unpleasant odors associated with binders based on blast furnace slag, the Applicant has suggested in WO 2014/013199 to mix with slag a metal salt of mono-, di- or trivalent salt selected from the group consisting of bismuth, copper, silver or tin. When placed in the presence of the binder based on blast furnace slag, the metal salt reacts with the sulfur compounds to form a complex sulfide, which then precipitates and remains in solid form. The fact that the product obtained is very sparingly soluble makes it possible to trap the compounds responsible for the malodor. The use of metal compounds however impacts the cost of these binders and in some cases raises environmental issues. Above all, the amount of salts should be low enough in order not to hamper cement hydration. This low amount usually leads to insufficient malodor reduction over time.

There still remains the need for efficient means to reduce the smell of blast furnace slag when used in high proportions in mortar or concrete compositions, without detrimentally affecting the properties of the hardened mortar, especially its dry and wet tensile strength and its tensile strength after 30 min open time, and without detrimentally affecting the economics of its preparation process.

The inventors have now shown that this need can be satisfied by a cementitious composition comprising biochar in specific proportions.

Biochar results from the partial pyrolysis at 400-800°C, under low oxygen atmosphere, of biomass. Biomass itself derives from sugar and oxygen which are the products of photosynthesis by plants which absorb carbon dioxide and water. Since they have turned into biomass and then biochar, sugar and oxygen cannot be turned back into carbon dioxide by the respiratory cycle of the plants. Carbon dioxide is thus trapped into biochar which is thus regarded as a "CO₂ sink". The carbon content of biochar represents more than 90% of its weight and corresponds to the CO₂ removed from the atmosphere by the plants. It has been calculated that biochar has a negative CO₂ footprint, which is about -3kg CO₂/kg of biochar.

It has already been suggested to use biochar in addition to cements in the manufacture of mortars. Thus, US 2022/0298073 suggests that using at least 2 wt. % of biochar in a hydraulic binder comprising a cement not only reduces the amount of cement in the mortar composition, but also sequester carbon within the cement matrix, thus reducing the emission of carbon into the atmosphere. By "cement", it is meant Portland or non-Portland cement, such as slag-based cements, although only Portland cement is used in the Examples of US 2022/0298073. In addition, this document does not deal with the issue of slag smelling and thus does not suggest that biochar may have any positive impact thereon. Furthermore, it does not suggest that adding biochar in specific proportions to a slag-bas problem mortars would be effective for reducing the smell of slag. The same applies to the hydraulic binder based on clinker and biochar recently launched by VICAT. Similarly, DE 10 2021 001 327 further suggests adding biochar to the formulation of concrete to reduce the environmental impact of the latter.

### SUMMARY

This invention is directed to a cementitious composition comprising:
- slag,
- at least one hydraulic binder and/or at least one activator,
- biochar particles, and
- at least one aggregate,
characterized in that the weight ratio of biochar to slag ranges from 0.025:1 to 0.15:1.

It also pertains to a mortar prepared by combining the cementitious composition as described above with water, preferably in a weight ratio of water to the cementitious composition ranging from 20% to 40%, preferably from 25 to 30%.

This invention is further directed to a method for preparing a mortar, comprising mixing the cementitious composition as described above with water, preferably in a weight ratio of water to the composition ranging from 20% to 40%, preferably from 25 to 30%.

It is still further directed to the use of this mortar to manufacture tiling adhesives such as adhesives for the bonding of ceramic or glass tiles or joints; to assemble building components, such as masonry mortars; as facade mortars, such as smoothing mortars, undercoats, single-coat renderings, organic finishing mortars, internal plasters, insulating mortars and waterproofing mortars; as flooring mortars; or as repair mortars, such as injection mortars.

### DETAILED DESCRIPTION

This invention is directed to a cementitious composition. By this expression, it is intended to mean a pulverulent mixture whose constituents are all in solid form, usually in the form of powder and/or granules. This composition typically contains less than 5 wt.% of water, such as less than 3 wt.% of water or even less than 1 wt.% of water, and which is able, when mixed with water, to form a paste or slurry which hardens when exposed to air.

This composition comprises slag. As used in this invention, "slag" refers to a by-product of an industrial process implementing the melting of a starting material, which melting is intended to separate metals from an oxide phase, the latter being referred to as "slag". Slag is generally quenched in water to obtain amorphous grains which are then ground to activate it. Preferably, the slag used in this invention is selected from slags resulting from metallurgical processes, such as blast furnace slag, oxygen steel furnace slag, electric furnace slag and mixtures thereof.

Blast furnace slag is a coproduct resulting from the manufacture of the melt from iron ore; it corresponds to the sterile gangue, isolated from the liquid cast iron by density difference. The molten slag is lighter and floats on the bath of liquid steel. A slag of blast furnace essentially comprises aluminosilicates, and sulfides in smaller amounts. The slag obtained by quenching of the molten slag or tempering with the aid of air and/or jets of high pressure water has a glassy structure. This leads to granulated slag which has hydraulic properties and a particle size of less than 5mm. These slag granules can be comminuted after drying and used in this invention. Most of the ground granulated blast furnace slags have a fineness between 3,800 and 4,500 cm² /gm (also expressed in Blaine unit).

In the above process, the liquid cast iron is further treated in an oxygen furnace or converting unit to produce liquid steel which is then separated from slag. The latter, which is known as oxygen steel furnace slag (LD/LWS/OBM), may also be used in this invention. In case an electric arc furnace is used instead of an oxygen converting unit, another type of slag may be obtained, which is called electric furnace slag (LAFE).

Most preferably, the slag used in this invention is blast furnace slag since it is the most widespread.

The slag typically represents from 20 to 50 wt.% and preferably from 30 to 40 wt.% and more preferably from 35 to 40 wt.%, relative to the total weight of the composition.

In addition to slag, the cementitious composition of this invention comprises at least one hydraulic binder and/or at least one activator.

When present in the cementitious composition of this invention, the hydraulic binder can advantageously comprise a clinker which may be selected from Portland clinker, aluminous clinker, sulfoaluminous clinker, ferro-aluminous clinker and their mixtures. Preferably, the hydraulic binder is selected from a Portland cement, an aluminous cement, a sulfoaluminous cement, a ferro-aluminous cement and their mixtures. The hydraulic binder comprising a clinker is preferably selected from Portland cements of type I or II, i.e. CEM I or CEM 2 according to NF EN 197-1. The hydraulic binder may be used, in a preferred embodiment, in amounts of less than or equal to 1 wt.% relative to the total weight of the composition.

The term "sulfoaluminous clinker" means a hydraulic material obtained by a process comprising heating at high temperature (from 900°C to 1450°C) mixtures containing at least one source of lime (for example limestone which has a CaO varying between 50% and 60%), at least one source of alumina (for example bauxites, calcined alumina or other manufacturing by-product containing alumina) and at least one source of sulphate (gypsum, gypsum chemicals, natural or synthetic anhydrite, plaster, sulpho-calcic ashes). Preferably, the sulfoaluminous clinker is characterized by a main yee'limit phase (50% to 68% by weight relative to the total weight of the clinker), and by a belite phase (10% to 20% by weight). The sulfoaluminous clinker can also have other components such as ferrite, perovskite, mayenite, calcium ferroaluminate, etc. The proportion of these other components varies from 0% to 20% by weight.

"Ferro-aluminous clinker" means a hydraulic material whose manufacture is based on the firing at high temperature (from 1300°C to 1600°C) in a furnace of a mixture of raw materials containing at least the oxide calcium, alumina and ferrite.

By "aluminous clinker", it is meant a material chosen from the materials defined by standard NF EN 14647 (molten aluminous cement (CA) or calcium aluminate cements). These materials result from the fusion of a mixture of limestone and bauxite, followed by grinding without gypsum to a fineness comparable to that of Portland cements.

Preferably, the cement clinker has a Blaine specific surface of between 3000 cm²/g and 6000 cm²/g. The Blaine specific surface can be determined as described in EN 196-6 paragraph 4.

The term "hydraulic binder" is understood to mean, where appropriate, collectively, all the hydraulic binders present in the composition.

The total content by weight of hydraulic binder and slag in the dry mortar is preferably within a range extending from 15 to 45 wt.%, preferably from 30 to 40 wt.%, relative to the weight of the cementitious composition.

Advantageously, the weight ratio of hydraulic binder to slag ranges from 5g/kg to 50g/kg, preferably from 7g/kg to 30g/kg and more preferably from 20g/kg to 30g/kg.

The composition of this invention can additionally comprise an activator, that is to say a system comprising at least one compound intended to improve the setting and/or the curing of slag. The activator may be selected from:
- alkaline activators comprising alkali metal hydroxides, alkaline earth metal hydroxides, alkali metal carbonates, alkali metal silicates, alkaline earth metal silicates and mixtures thereof, such as slaked lime, sodium hydroxide, potassium hydroxide, sodium carbonate, potassium carbonate, sodium silicate, sodium metasilicate and/or potassium silicate,
- activators of sulfate type, such as calcium sulfate and sources of calcium sulfate, such as gypsum, calcium sulphate hemihydrate, anhydrite and/or phosphogypsum.

Calcium sulfate is preferred as an activator, because it makes it possible to operate under mild conditions.

The content of activator depends on the type of activator used and can vary between 0.1% and 15% by weight, with respect to the weight of slag. This guarantees satisfactory activation at the start of the reaction and trapping of water, while avoiding excessive late formation of ettringite and thus weakening the cementitious material after drying.

Notably, the cementitious composition of this invention can comprise either one or more hydraulic binders, either one or more activators, or mixtures of both. In addition, the same material can act both as a hydraulic binder and as an activator, as is the case with lime. This is also the case with Portland cement, which releases portlandite (Ca(OH)₂) during hydration and thus forms a calcium-based activator *in situ.*

The cementitious composition of this invention is characterized in that it further comprises biochar.

Biochar is the carbonaceous material that remains after a biomass has been subjected to a thermal treatment process in a low-oxygen atmosphere, that leads to carbonization. In some embodiments of the present disclosure, biochar refers to pyrolyzed biomass. The biochar used in the cementitious compositions of this invention may be produced using either a fast pyrolysis (FP) process or a slow pyrolysis process (SP). Generally speaking, in fast pyrolysis processes, feedstock is heated at a heating rate between 1°C/second and 100°C/second to a temperature between about 400°C and about 900°C for a period of time of on the order of seconds to tens of seconds by using particle sizes that are typically less than about 6 mm. In contrast, in slow pyrolysis processes feedstock is slowly heated at a low heating rate (between 0.1°C/second and 1°C/second) to temperatures of between about 300°C and 500°C for a period of time ranging from minutes, hours, to even days, by using particle sizes or piles of powder typically having a particle size of greater than about 0.6 mm, or more typically greater than about 1 cm.

Biomass waste materials used in the production of biochar include, but are not limited to: agricultural residues (e.g., barley straw, rice hull, corn stover, and bagasse), as well as food waste; papermill waste; forestry and logging waste; and animal manures. Other suitable biomass materials include, but are not limited to, energy crops such as switchgrass and sugar cane, bamboo, softwood (e.g., pine), and hardwood (e.g., poplar). One or more biomass materials or biochars may be used in this invention. The feedstock material(s) may be subjected to air-classification to isolate high inorganic content biomass fractions away from primary feedstock sources to reduce their ash content. The feedstock material(s) may also undergo size reduction to form pellets or granules.

In a preferred embodiment, the biochar particles used in this invention have a BET surface area between 150 and 400 m²/g, preferably between 300 and 400 m²/g.

The cementitious composition of this invention further comprises at least one aggregate. Depending on the type of aggregates contained therein, the composition may be used to form a mortar or concrete when mixed with water.

The aggregates used in the compositions of mortar generally have a diameter less than 8 mm. The aggregates are mineral grains, in particular grains of stone, limestone, quartz, dolomite, gravel, pebbles and/or sand (based on silica and/or silica/limestone), whose content generally varies between 30 and 95 wt.%, preferably from 40 to 70 wt.% and more preferably from 50 to 60 wt.%, with respect to the weight of the cementitious composition.

In an embodiment, the cementitious composition is dry concrete and the aggregate material comprises sand and at least one additional aggregate selected from rock pieces, pebbles, gravels and their mixtures.

The cementitious composition according to this invention is preferably a dry mortar and the aggregate material thus comprises sand.

The cementitious composition can also comprise additives conferring specific properties thereon. Mention will be made, for example, of rheological agents, water-retaining agents, air-entraining agents, thickening agents such as cellulose ethers and starch ethers (in an amount of 0.2 to 0.7 wt.% for instance), biocidal protecting agents, dispersing agents, pigments, curing accelerators such as calcium formiate (in an amount of 0.1 to 1 wt.% for example) and/or retarders, wetting agents such as alkyl sulfonates (in an amount of 0.05 to 2 wt.% for example), powders of redispersible polymers (in an amount of 0.5 to 20 wt.% for example), and mixtures thereof. The content of additives can vary between 0.1% and 10% by weight, with respect to the total weight of the composition.

Redispersible polymers are polymers which, once water is added to the cementitious composition, form a latex or polymeric dispersion. Mention can be made of poly(vinyl esters of C₁-C₁₅ carboxylic acids), poly(C₁-C₁₅ alkyl methacrylates), vinyl aromatic polymers, polyolefins such as polyethylene, poly(vinyl halides) and mixtures thereof.

The cementitious composition may further comprise fillers of low density, such as expanded glass, expanded clay, vermiculite and/or expanded perlite, which may be coated with a hydrophobic layer. Organic fillers such as expanded polystyrene and expanded elastomers may also be used for that purpose.

The present invention also relates to a method for preparing mortars, comprising mixing the cementitious composition with water, preferably in a weight ratio of water to the composition ranging from 20% to 40%, preferably from 25 to 30%.

The mortar may be used to manufacture tiling adhesives such as adhesives for the bonding of ceramic or glass tiles or joints; to assemble building components; as facade mortars, such as smoothing mortars, undercoats, single-coat renderings, organic finishing mortars, insulating mortars and waterproofing mortars; or as repair mortars, such as injection mortars.

The mortar may be applied to any substrate, such as a wall, a panel or a floor such as a screed, such as to cover it with tiles. The tiles can be made of various materials, such as ceramic, sandstone, cement, stone, marble, etc. The mortar can for example be applied to the substrate, and possibly to the tiles by means of a glue comb, a trowel or a notched trowel.

### BRIEF DESCRIPTION OF THE DRAWINGS

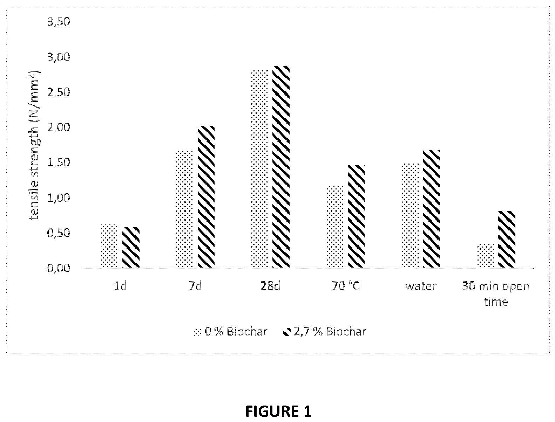

Figure 1 represents the tensile strength of a tile adhesive prepared from a cementitious composition according to this invention, compared to a tile adhesive deprived of biochar, under various conditions.

This invention will be better understood in light of the following examples which are given for illustrative purposes only and do not intend to limit the scope of the invention, which is defined by the attached claims.

### EXAMPLE

A dry mortar was prepared by blending the following ingredients:

| Constituent | Amount (wt.%) |
|---|---|
| Blast furnace slag | 38% |
| Activators (incl. cement) and additives | 3% |
| Biochar | 2.7% |
| Redispersible polymer powder | 3% |
| Aggregates and fillers (incl. sand) | 53.3% |
| Total | 100% |

The dry mortar was then mixed with 28% of water, relative to the weight of dry mortar, at a temperature of 23°C, to obtain a tile adhesive which was split into samples. The mortar samples thus obtained were applied on a concrete surface and standardized tiles were used for the adhesion tests, according to NF EN 12004-2. The tensile strength was measured after 1, 7 and 28 days at 23°C and after 29 days at 70°C. Another set of samples was tested for their tensile strength when wet, according to NF EN 12004-2. Finally, the tensile strength after 30 min open time was measured according to NF EN 12004-2. Comparative samples obtained from the same formulation as above, but in which biochar was replaced by a corresponding amount of sand, were prepared and tested in the same way.

The results of these experiments are shown on Figure 1. As can be seen, the dry and wet tensile strength of the samples according to this invention were similar to those of the comparative samples, and it was even slightly increased after 30 min open time.

In addition, a panel of 5people evaluated the smell of the mortar prepared without biochar, which was stored overnight in plastic buckets that were closed with a lid. Their smell was similar to that of rotten eggs after 24h. On the contrary, the smell of the mortar according to this invention was significantly reduced or even unnoticeable for some people.

Finally, calculations were made to assess the CO₂ footprint of the above formulation according to this invention, but comprising 2.9% biochar instead of 2.7%, compared to the formulation which did not include biochar. Emissions resulting from transportation or production were not taken into account (but only the CO₂ emissions of the constituents of this formulation). It was found that the CO₂ emission of the inventive formulation was 0 kg CO_{2 eq}. / ton of product, whereas that of the comparative formulation was 90 kg CO_{2 eq}. / ton of product.

## Claims

1. A cementitious composition comprising:
- slag,
- at least one hydraulic binder and/or at least one activator,
- biochar particles, and
- at least one aggregate,
**characterized in that** the weight ratio of biochar to slag ranges from 0.025:1 to 0.15:1.

2. The cementitious composition according to claim 1, **characterized in that** the hydraulic binder comprises a ground clinker selected from Portland clinker, aluminous clinker, sulfoaluminous clinker, ferro-aluminous clinker and their mixtures, preferably the hydraulic binder is selected from a Portland cement, an aluminous cement, a sulfoaluminous cement, a ferro-aluminous cement and their mixtures.

3. The cementitious composition according to claim 2, **characterized in that** the weight ratio of the hydraulic binder to the slag ranges from 5g/kg to 50g/kg, preferably from 7g/kg to 30g/kg and more preferably from 20g/kg to 30g/kg.

4. The cementitious composition according to any one of claims 1 to 3, **characterized in that** it comprises at least one activator selected from the group consisting of:
- alkaline activators comprising alkali metal hydroxides, alkaline earth metal hydroxides, alkali metal carbonates, alkali metal silicates, alkaline earth metal silicates and mixtures thereof, such as slaked lime, sodium hydroxide, potassium hydroxide, sodium carbonate, potassium carbonate, sodium silicate, sodium metasilicate and/or potassium silicate,
- activators of sulfate type, such as calcium sulfate and sources of calcium sulfate, such as gypsum, calcium sulphate hemihydrate, anhydrite and/or phosphogypsum.

5. The cementitious composition according to claim 4, **characterized in that** the activator represents from 0.1 to 15 wt.%, relative to the weight of slag.

6. The cementitious composition according to any one of claims 1 to 5, **characterized in that** the slag is selected from slags resulting from metallurgical processes, such as blast furnace slag, oxygen steel furnace slag, electric furnace slag and mixtures thereof, preferably the slag is blast furnace slag.

7. The cementitious composition according to any one of claims 1 to 6, **characterized in that** the slag represents from 20 to 50 wt.% and preferably from 30 to 40 wt.% and more preferably from 35 to 40 wt.%, relative to the total weight of the composition.

8. The cementitious composition according to any one of claims 1 to 7, **characterized in that** the biochar particles have a BET surface area between 150 and 400 m²/g, preferably between 300 and 400 m²/g.

9. The cementitious composition according to any one of claims 1 to 8, **characterized in that** it is a dry mortar and the aggregate material comprises sand.

10. A mortar prepared by combining the cementitious composition with water, preferably in a weight ratio of water to the cementitious composition ranging from 20% to 40%, preferably from 25 to 30%.

11. A method for preparing a mortar, comprising mixing the cementitious composition according to any one of claims 1 to 9 with water, preferably in a weight ratio of water to the composition ranging from 20% to 40%, preferably from 25 to 30%.

12. Use of the mortar according to claim 10 to manufacture tiling adhesives such as adhesives for the bonding of ceramic or glass tiles or joints; to assemble building components such as masonry mortars; as facade mortars, such as smoothing mortars, undercoats, single-coat renderings, internal plasters, organic finishing mortars, insulating mortars and waterproofing mortars; as flooring mortars; or as repair mortars, such as injection mortars.
